Europäisches Patentamt

European Patent Office

Office européen des brevets

(11) Publication number: **0 069 187**
**A1**

(12) **EUROPEAN PATENT APPLICATION**

(21) Application number: **81830174.9**

(22) Date of filing: **25.09.81**

(51) Int. Cl.³: **A 47 J 37/07**
**A 47 J 37/04**

(30) Priority: **08.07.81 IT 4885781**

(43) Date of publication of application:
**12.01.83 Bulletin 83/2**

(84) Designated Contracting States:
**AT BE CH DE FR GB LI NL SE**

(71) Applicant: **Teodoro, Arrigo**
**Via Statale, 16**
**I-65016 Montesilvano Spiaggia (PE)(IT)**

(72) Inventor: **Teodoro, Arrigo**
**Via Statale, 16**
**I-65016 Montesilvano Spiaggia (PE)(IT)**

(74) Representative: **Mascioli, Alessandro, Prof.Dr.**
**c/o A.N.D.I. Associazione Nazionale degli Inventori Via**
**Lima, 35**
**I-00198 Roma(IT)**

(54) **Vertical grill cooking device.**

(57) Cooking device with vertical grill with heat sources developed and arranged vertically to make use, separately or at the same time, of all radiation, particularly that coming from the side walls, in order to cook the food on the fixed or moveable vertical grills or gridirons installed in front of the above mentioned walls, with all melted fat dripping into purposely arranged containers on the bottom, which may contain water, to eliminate smoke or fumes.

FIG.4

EP 0 069 187 A1

0069187

## Vertical grill cooking device

This invention concerns a grill-type cooking device with vertically arranged and installed heat sources.

It is well known that currently used grills, barbecuse, roasting-jacks and the like have their heat source (gas burners, electric resistors, coal and/or wood embers) installed beneath the food being cooked, with the result that the fats and juices melted by the heat fall on the source and are partially carbonized, generating fumes and smoke which on rising, come into contact with the food, modifying its taste and depositing on it dangerous compounds such as benzopyrene and the like.

On the other hand, in the case of some roasting-jacks of known type, the presence of one thermal source only lengthens the cooking operation considerably; cooking occurs only when the food is near the heat source, which happens in a very short period for each whole revolution performed by the device.

The aim of this invention is to develop a grill-type cooking device which is quick, economical (i.e., not expensive) and also extremely safe because it can eliminate all smoke, fumes and deposit of unburned particles on the food.

This aim is achieved by means of a cooking device equipped with vertically arranged and installed heat sources by means of which all the radiation, both separately and simultaneously, may be utilized, and especially that emanating from the side walls. The food is arranged in vertical, fixed or rotating, grills or gridirons installed at a short distance from the above mentioned side walls, thus causing all melted fat to fall into purposely arranged containers in the bottom of the device, which may contain water, in order to prevent the development of smoke and fumes.

In one variation the invention provides for a grill-type cooking device manually portable in a purposely made container, which can be opened and used when needed.

In another variation, the invention includes several vertical heat sources, consisting of a network of baskets filled with wood or charcoal placed in parallel on a fixed frame in such a way as to leave some side spaces where several electrically driven grills are installed. In this way, a considerable quantity of food may be cooked simultaneously for restaurants and large communities.

The advantages of the invention are as follows:
1. an exceptional saving of fuel, because of the very large thermal radiating surface relative to the volume;

2. total lack of burned fats, noxious condensations and unpleasant smells in and from the foods, which are also continuously self-basted by all kind of fats being melted and dripping along their surface, thus maintaining the food's natural flavour;

3. shorter cooking times because of the presence of the heat sources on both sides of the gridirons;

4. cooking is gradual depending upon the temperatures required for different food, since the vertical heat sources may be moved closer to or further from the sides of the gridirons;

5. immediate and complete recovery of unburned firewood or charcoal since the network baskets are placed in purposely designed containers which may be easily closed to shut off the air that feeds the fire.

Some preferred variations of the invention are shown in the attached drawings, in figures 1 to 11.

Figure 1 shows an axonometric view of the unfolded portable cooking device.

Figure 2 shows the device as in the preceding figure, when open for operation.

Figure 3 shows an exploded axonometric view of a vertical grill.

Figure 4 shows an axonometric view and a partial cross

-4-

section of a variation of the invention particularly suitable for restaurants and large communities.

Figure 5 shows a possible lighting device for the charcoal and firewood, installed between the vertically arranged baskets.

Figure 6 shows a variation of an automatically rotating grill.

Figure 7 shows a variation of support with different heights for an automatically rotating grill.

Figure 8 shows an axonometric view of a variation of the device with rotary spits.

Figure 9 shows an axonometric cross section view of the movement device.

Figure 10 shows an axonometric cross section and figure 11 shows some variations in the gridirons.

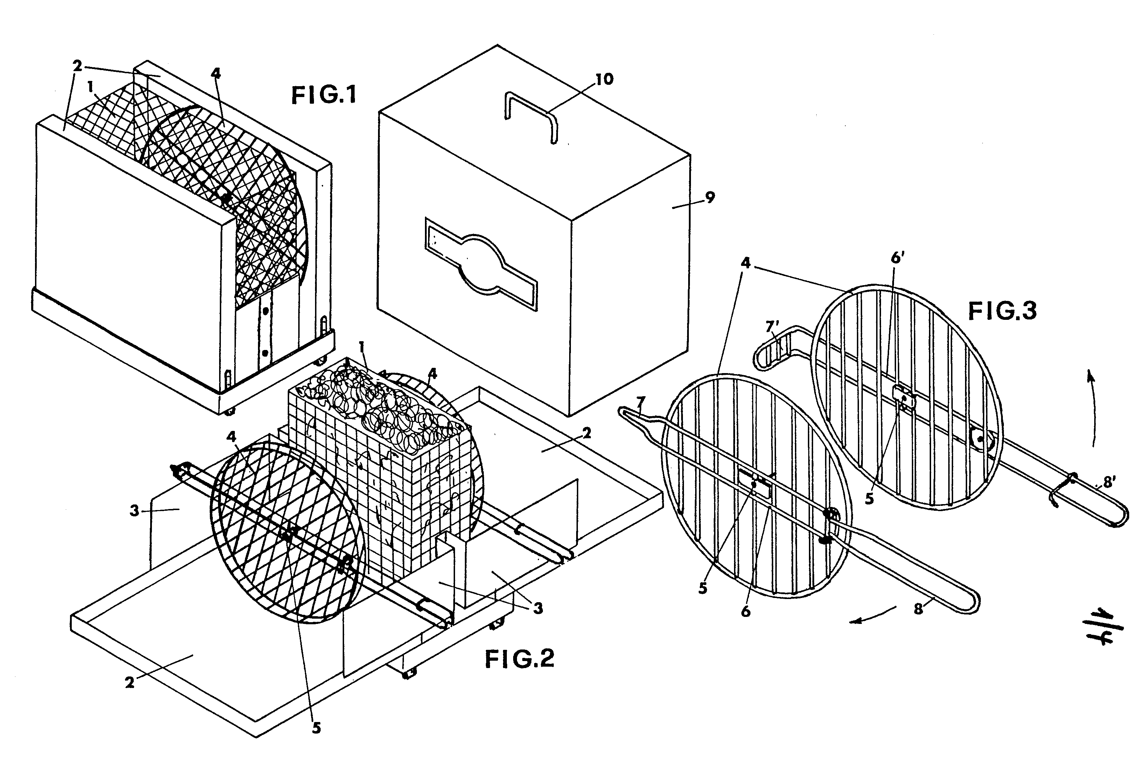

Figures 1, 2 and 3 show the network baskets 1, normally filled with charcoal, firewood or similar material, installed at the center of both metal folding walls 2 which can form, when opened, a support surface by means of the supports 3 of the grills 4. Said grills may be circular or any other shape as desired, and may be manually driven, as desired, with rotation around the pivot pins 5, when said grills are arranged beside the above mentioned baskets 1, where in a short time there are embers which may be lighted with gas, alcohol or in any other known way. Said grills have cross supports 6 and 6' at one end of which there are, respectively, insertion bit 7 and differential housing 7' in such a way that, when said bit 7 is put in the pegs after the above mentioned housing 7', the spacing of said grills 4 may be varied in order to hold food of different size. At the opposite end are handles 8 and 8' which can be folded, according to the arrows, in order to occupy a minimum transport space when, having folded the above mentioned walls 2, everything is covered and fastened by means of the parallelepiped container 9 with handle 10 on top.

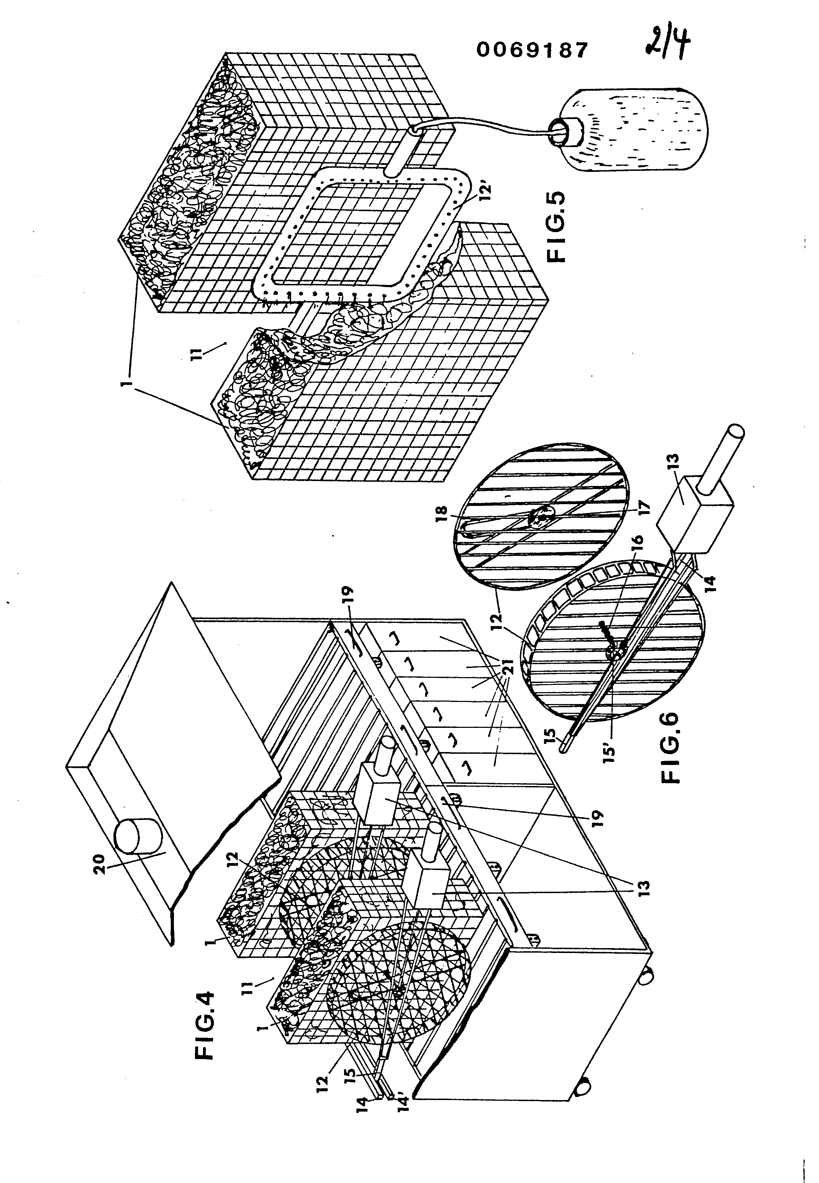

As shown in figures 4, 5 and 6, spaces 11 between baskets 1 may vary greatly in size; a gas source 12' or a source of another fuel is installed to initiate combustion of the charcoal or firewood in baskets 1. Then, as soon as burning embers are obtained, the above mentioned spaces 11 form the vertical housings for grills 12, characterized by being automatically turned by the electric motor with reduction unit installed in container 13, which drives shaft 14 in its rotary movement. Said shaft by means of pinion 15', integral with coupled grills 12, drives said grills in their ortary movement; the power supply of the motor contained in container 13 has no free cables hanging because contact is obtained on both rear bars 14 and 14' which serve as a support for fixing end 15 and moreover have opposite polarities and send the current to the motor enclosed in the container 13 by means of electrically insulated cables.

Grills 12 may also be arranged at different distances from one another in order to hold food of different sizes with an adjusting device consisting of the pin 16 with sequential grooves, integral with one of the grills, installed within the hole 17 of the other grill and locked there, every time, by the lever arm 18.

In this variation the support system has drawers 19 which may be removed; in the above mentioned drawers the melted fats fall into the water. Moreover, upper hood 20 removes all fumes and smoke, if any, from food in large quantities. There are also metal containers 21 where one can put baskets 1 after they are removed by means of levers, tongs or similar tools. The embers are extinguished due to the lack of oxygen and the unburned fuel is recovered.

In a further variation, a support with vertical surfaces 22 can support end 15 of grill 12 at different heights and thus at different distances from the heat source to exploit the top radiation for those devices of smaller size.

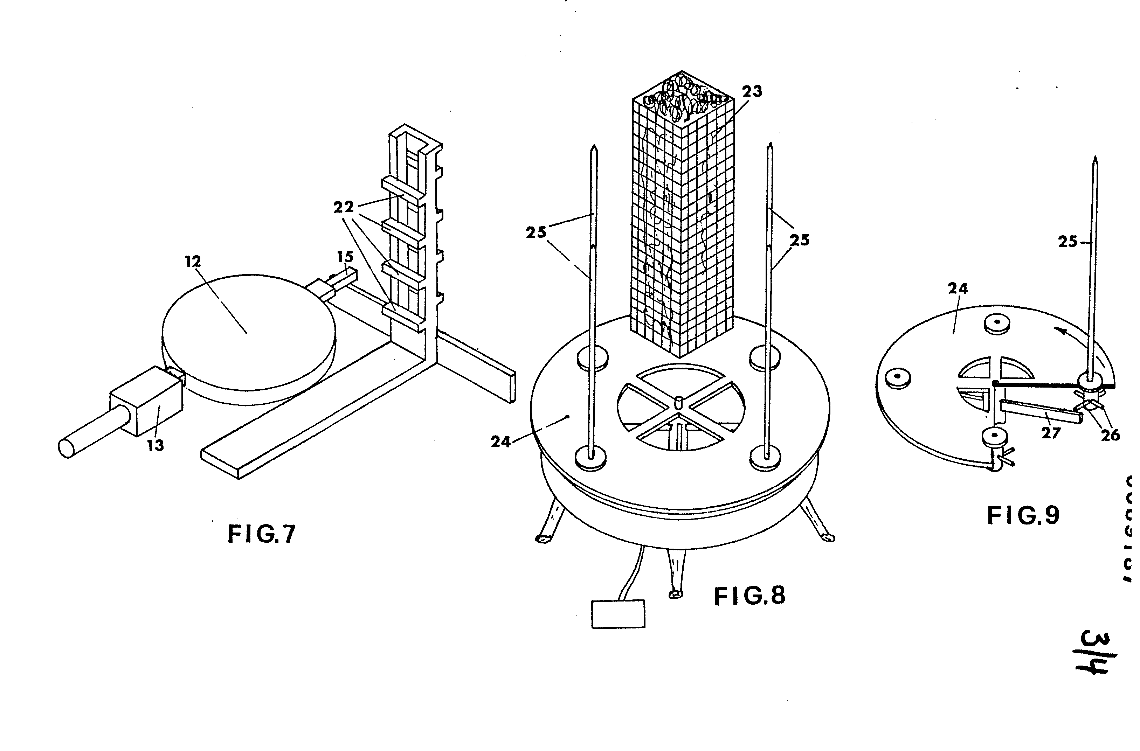

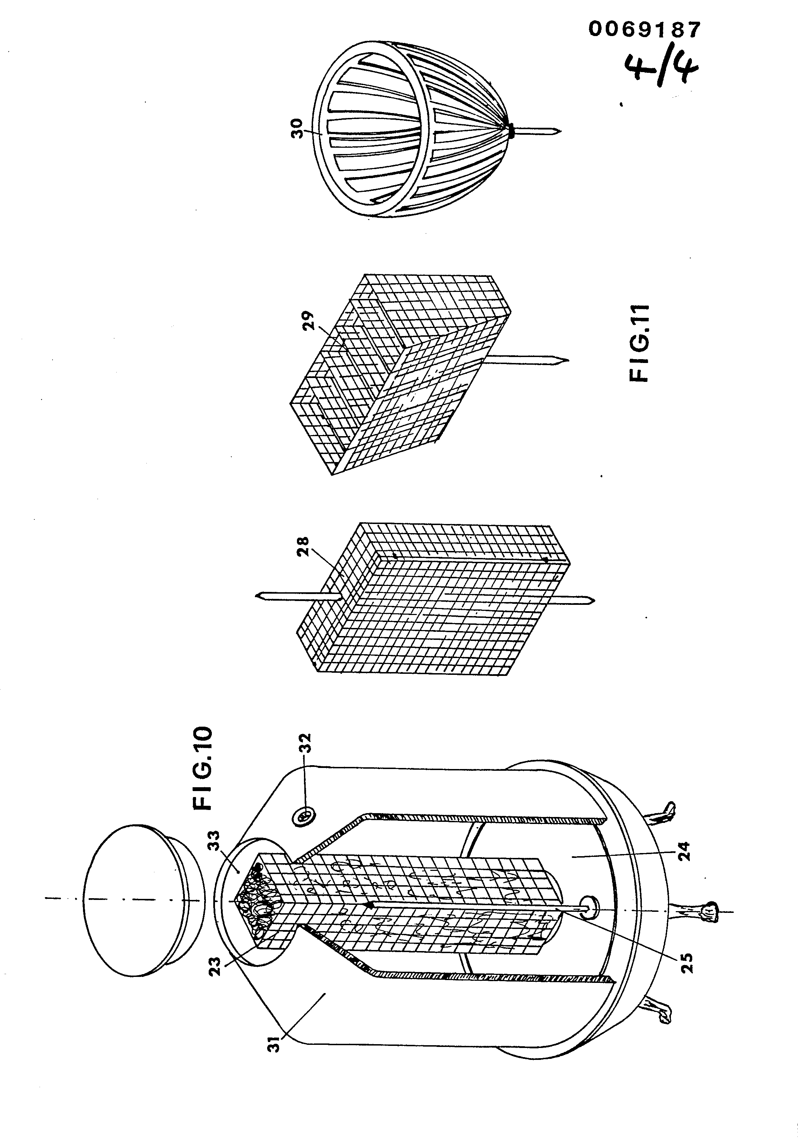

The device according to figures 8, 9 and 10 consists of a rotary dish 24 which is electrically powered relative to the network-type central basked 23 which carries the fire. The basket does not move and is preferably in the shape of a parallelepiped prism whose height is larger than the depth and width; it thus has four radiation faces to cook the food arranged within baskets like 28, a flat and swingable one, 29, with several separate bins particularly suited for several fish, and 30 of cup shape for chicken to be put in any position desired, or any other type. Or they can be spitted in the vertical spits 25. All are turned by the revolutions of the above mentioned dish 24, due to the blows of cross pivot pins 26 integral with the spits and/or baskets against radial bars 27, which are integral with the support during the rotary movement of said dish 24 and thus have no movement at all.

In the final variation, there is a lid of a particular shape 31 able to close the whole device like an oven with a vent for the fumes 31 or a suction duct of a known type. Top opening 33 is provided to extract the central basket 23, to charge the fuel or for any other reason.

Of course, while the principle of the invention remains the same, the forms and details of construction may be varied widely from that described and illustrated here, without going beyond the bounds of this invention.

0069187

Claims:

1. Grill-type cooking device with heat sources arranged and developed vertically to form housings on the sides where gridirons or grills containing the food may be inserted.

2. Grill-type cooking device as claimed in claim 1, wherein network baskets 1 (normally filled with charcoal, firewood or similar materials) are placed in the centre of both foldable metal walls 2, and arranged to form when open a support surface by means of supports 3 of grills 4; said grills may be circular or any other shape as required, and may have manual rotary movement around pivot pins 5, when they are inserted beside the above mentioned baskets 1, where in a short time there are burning embers as the fuel is lit with alcohol, gas or any other known method; said grills 4 have cross supports 6 and 6' at the end of which there are respectively insertion bit 7 and differential housing 7', arranged so that, by putting said bit 7 in the pegs after in the housing 7', the distance between the above mentioned grills 4 may be varied in order to hold food with different space requirements; at the opposite end are handles 8 and 8' which can be folded to occupy a minimum space during transport, when, after having folded walls 2, the whole device is covered and fastened by means of parallelepiped container 9, with handle 10 on top.

3. Grill-type cooking device as claimed in claim wherein the spaces 11 between baskets 1 contain gas source 12' or a source of any other fuel to initiate combustion of charcoal or of firewood in the above mentioned baskets 1, thereafter, once there are burning embers, the above spaces 11 form the vertical housings for grills 12; siad grills are automatically driven in their rotary movement by the electric motor with reduction unit installed within container 13; said motor drives shaft 14 which, by means of pinion 15', is integral with coupled grills 12 and drives them in their rotary movement; the electric supply of the motor contained within container 13 has no hanging cable because contact is created on both rear bars 14 and 14', which serve as supports for fixing end 15, and moreover have opposite polarities thus sending current to the motor contained in container 13 by means of electrically insulated cables.

4. Grill-type cooking device as claimed in claim 3 wherein the above mentioned grills 12 may be placed at different distances in order to contain food with different space requirements, thanks to the presence of an adjusting device consisting of pin 16 with grooves in sequence integral with one of the grills, placed within hole 17 of the other grill and locked there, every time, by lever arm 18.

5. Grill-type cooking device as claimed in claims 3 and 4 wherein the support surface has extractable drawers 19 where the melted fat from the food falls into the water; upper hood 20 removes all smoke and fumes, if any caused by great quantities of foods; metal containers 21 are provided where baskets 1 may be stored after having been taken with levers, tongs and similar tools, thus extinguishing the embers due to lack of oxygen and allowing recovery of all not yet burned fuels.

6. Grill-type cooking device as claimed in claim 1 wherein a support with vertical surfaces 22 may support end 15 of grill 12 at different heights and thus at different distances from the heat source, to use the upper radiation for all devices of smaller size.

7. Grill-type cooking device as claimed in claim 1 formed by a rotary dish 24 which is electrically driven relative to central basket 23 carrying the embers; said basket does not move and preferably is shaped as a parallelepiped prism with height greater than width and depth to provide four radiation faces to cook the food placed within the various network baskets, like flat and swingable basket 28, basket 29 with several bins which is particularly appropriate for several fish, cup-shaped basket 30 for chicken put in any position, and any other type or spitted on vertical spits 25; all these are turned during the revolutions of cross pins 26 integral with the spits and/or baskets, against the radial bars 27, integral with the support during the rotary movement of the above mentioned dish 24 and therefore motionless.

8. Grill-type cooking device as claimed in claim 2, with a lid 31 shaped to close the whole device like an oven, with the relevant smoke vent 32, or suction duct of any known type, and upper opening 33 of a convenient size to take off the central basket 23 in order to refuel same or for any other reason.

FIG.1

FIG.2

FIG.3

1/4

FIG.5

FIG.4

FIG.6

FIG.7

FIG.8

FIG.9

3/4

FIG.10

FIG.11

# 0069187

EUROPEAN SEARCH REPORT

Application number

EP 81 83 0174

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 962 019 (LUNDGREN) *Figures 1 and 2* | 1,2 | A 47 J 37/07 A 47 J 37/04 |
| X | US-A-3 297 017 (LEVIN) *The whole document* | 1,2,4 | |
| X | CH-A- 377 505 (BONDANINI) *The whole document* | 1,2 | |
| A | CH-A- 369 270 (MEYER) *Figures 1-3* | 1,2 | |
| A | US-A-3 175 549 (BERGSTEN) *Figures 2,3,6,7,8* | 1,2 | |
| A | US-A-3 010 384 (LINGELBACH) *Figures 1,2; column 3, lines 15-35; column 4, lines 10-17* | 1,3,4, 5 | TECHNICAL FIELDS SEARCHED (Int. Cl. 3) |
| A | US-A-2 069 824 (ENGEL et al.) *Figure 4* | 1,5 | A 47 J F 24 B |
| A | US-A-2 681 001 (SMITH) *Figures 1,9,10,11* | 2,6 | |
| A | US-A-3 009 410 (MURPHY) *Figures 1,6,7* | 7 | |
|  | -/- | | |

The present search report has been drawn up for all claims

| Place of search | Date of completion of the search | Examiner |
|---|---|---|
| THE HAGUE | 06-10-1982 | SCHARTZ J. |

**European Patent Office**

## EUROPEAN SEARCH REPORT

| | DOCUMENTS CONSIDERED TO BE RELEVANT | | Page 2 | |
|---|---|---|---|---|
| Category | Citation of document with indication where appropriate, of relevant passages | Relevant to claim | CLASSIFICATION OF THE APPLICATION (Int. Cl. ³) | |
| A | US-A-2 012 702 (ZOLOTAS) *Figures 2,3* | 7 | | |

----

TECHNICAL FIELDS SEARCHED (Int. Cl. ³)

The present search report has been drawn up for all claims

| Place of search | Date of completion of the search | Examiner |
|---|---|---|
| THE HAGUE | 06-10-1982 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO Form 1503. 03.82